(19) **Europäisches Patentamt / European Patent Office / Office européen des brevets**

(11) **EP 3 208 752 A1**

(12) **EUROPEAN PATENT APPLICATION**
published in accordance with Art. 153(4) EPC

(43) Date of publication:
**23.08.2017 Bulletin 2017/34**

(51) Int Cl.:
**G06N 99/00** (2010.01)　　**G06F 17/50** (2006.01)
**G06N 3/08** (2006.01)

(21) Application number: **15861504.7**

(22) Date of filing: **17.11.2015**

(86) International application number:
**PCT/JP2015/082262**

(87) International publication number:
**WO 2016/080394 (26.05.2016 Gazette 2016/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.11.2014 JP 2014234923**

(71) Applicant: **The Yokohama Rubber Co., Ltd.**
**Minato-ku**
**Tokyo 105-8685 (JP)**

(72) Inventors:
• **KOWATARI, Naoya**
**Hiratsuka City**
**Kanagawa 254-8601 (JP)**
• **KOISHI, Masataka**
**Hiratsuka City**
**Kanagawa 254-8601 (JP)**

(74) Representative: **Dilg, Haeusler, Schindelmann**
**Patentanwaltsgesellschaft mbH**
**Leonrodstrasse 58**
**80636 München (DE)**

(54) **DATA ANALYSIS METHOD AND DATA DISPLAY METHOD**

(57) A data analysis method targeting, in a plurality of input values and a plurality of output values having a predetermined relationship, two types of data, namely input data representing the plurality of input values and output data representing the plurality of output values. The method includes a step of finding at least one of a first indicator and a second indicator in objective function space, the plurality of output values being defined as an objective function. The first indicator is a distance from a preset value of the values of at least two objective functions among the values of the plurality of objective functions. The second indicator is expressed as a ratio of the values of at least two objective functions among the values of the plurality of objective functions.

FIG. 3A

FIG. 3B

**(Cont. next page)**

FIG. 3C

FIG. 3D

## Description

Technical Field

The present invention relates to a data analysis method and a data display method using a computer or the like targeting, in a plurality of input values and a plurality of output values having a predetermined relationship, two types of data, namely input data representing the plurality of input values and output data representing the plurality of output values. Specifically, the present invention relates to a data analysis method and a data display method for facilitating the understanding of causality between the plurality of input values and the plurality of output values.

Background Art

It is known that the causality between design variables and characteristic values can be found by using multi-purpose optimization combined with data mining in which design variables of a structure and the materials constituting the structure are used as input values and a plurality of characteristic values (objective functions) among the structure and the materials constituting the structure are used as output values.
In multi-purpose optimization targeting a plurality of characteristic values (objective functions), trade-off relationships often occur between characteristic values. In such a case, the optimal solutions form a solution set called a Pareto solution. Moreover, by analyzing the causality between the Pareto solution and the design variables, it is possible to find directionalities of the design variables that lead to a specific characteristic value balance, and this information can be used in the design process. Self-organizing maps have been proposed as a conventional method for analyzing the causality between design variables and characteristic values from Pareto solution data (see Non-Patent Document 1).
Non-Patent Document 1 describes the use of self-organizing maps, and also describes that the objective functions and design variables can be displayed on self-organizing maps. Non-Patent Document 1 also teaches that by displaying the objective functions and the design variables side-by-side, not only it is possible to visually grasp the correlation between objective functions, it is also possible to understand the causality between objective functions and design variables.

Citation List

Non-Patent Literature

Non-Patent Document 1: Nippon Gomu Kyokaishi, Vol.85, 2012, p.289-295

Summary of Invention

Technical Problem

As described above, Non-Patent Document 1 describes analyzing the causality between characteristic values (output values) and design variables (input values) using self-organizing maps.
Here, an important problem in multi-purpose optimization relates to searching for design values that improve a plurality of characteristic values. At the same time, distinguishing which design variables in design variable space improve a plurality of characteristic values is also an important problem. However, there are a plethora of design variables and characteristic values in regular product design and it is difficult to distinguish which design variables contribute greatly to the characteristic values. Additionally, there is a problem in that inexperienced analysts will not be able to understand causality even if the results are graphically presented.
Moreover, with self-organizing maps in which the causality between characteristic values and design variables is visualized, data is summarized so as to be easily understood by an analyst. However, there is a problem in that inexperienced analysts have a hard time understanding which factors affect the characteristic values.
An object of the present invention is to solve the problems of the related art described above and provide a data analysis method and a data display method whereby, in cases where a plurality of input values (design variables) and a plurality of output values (characteristic values) exist, understanding of the causality between the input values (design variables) and the output values (characteristic values) is facilitated.

Solution to Problem

To achieve the object described above, a first aspect of the present invention provides a data analysis method targeting, in a plurality of input values and a plurality of output values having a predetermined relationship, two types of data, namely input data representing the plurality of input values and output data representing the plurality of output values. The method includes a step of finding at least one of a first indicator and a second indicator in objective function space, the plurality of output values being defined as an objective function. In such a method, the first indicator is a distance from a preset value of values of at least two objective functions among values of a plurality of objective functions, and the second indicator is expressed as a ratio of values of at least two objective functions among values of a plurality of objective functions.

The data analysis method further preferably includes the steps of generating a self-organizing map using the two types of data, namely the input data and the output data; setting a threshold value using at least one of the first indicator and the second indicator; and finding regions on the self-organizing map corresponding to the threshold value. The data analysis method further preferably includes a step of performing regression analysis using the regions on the self-organizing map corresponding to the threshold value.

The data analysis method further preferably includes the steps of performing clustering processing using the regions on the self-organizing map corresponding to the threshold value; determining from the clustering processing if the regions are dividable into clusters; and when the regions are dividable into the clusters, generating a line using regression analysis on clusters for which a number of the regions is large.

For example, the input data representing the input values represents design variables of a structure and materials constituting the structure, and the output data representing the output values represents characteristic values of the structure and the materials constituting the structure. For example, the output data includes a Pareto solution.

A second aspect of the present invention provides a data display method targeting, in a plurality of input values and a plurality of output values having a predetermined relationship, two types of data, namely input data representing the plurality of input values and output data representing the plurality of output values. The method includes the steps of finding at least one of a first indicator and a second indicator in objective function space, the plurality of output values being defined as an objective function; displaying at least one of the first indicator and the second indicator together with the two types of data, namely the input data and the output data; generating a self-organizing map using the two types of data, namely the input data and the output data; setting a threshold value using at least one of the first indicator and the second indicator; finding regions on the self-organizing map corresponding to the threshold value; and marking and displaying the regions on the self-organizing map corresponding to the threshold value. In such a method, the first indicator is a distance from a preset value of values of at least two objective functions among values of a plurality of objective functions, and the second indicator is expressed as a ratio of values of at least two objective functions among values of a plurality of objective functions.

The data display method further preferably includes the steps of generating a self-organizing map using the two types of data, namely the input data and the output data; setting a threshold value using at least one of the first indicator and the second indicator; finding regions on the self-organizing map corresponding to the threshold value; and marking and displaying the regions on the self-organizing map corresponding to the threshold value.

The data display method further preferably includes the steps of performing regression analysis using the regions on the self-organizing map corresponding to the threshold value; and displaying results of the regression analysis on the self-organizing map.

The data display method further preferably includes the steps of performing clustering processing using the regions on the self-organizing map corresponding to the threshold value; determining from the clustering processing if the regions are dividable into clusters; and when the regions are dividable into the clusters, generating a line using regression analysis on clusters for which a number of the regions is large, and displaying the line represented by an approximation equation of the clusters on the self-organizing map.

For example, the input data representing the input values represents design variables of a structure and materials constituting the structure, and the output data representing the output values represents characteristic values of the structure and the materials constituting the structure. For example, the output data includes a Pareto solution.

Advantageous Effects of Invention

According to the data analysis method of the present invention, in cases where a plurality of input values and a plurality of output values exist, inexperienced analysts, for example, can easily understand the causality between the input values and the output values.

Additionally, according to the data display method of the present invention, in cases where a plurality of input values and a plurality of output values exist, inexperienced analysts, for example, can easily visually understand the causality between the input values and the output values.

Brief Description of Drawings

| FIG. 1A | is a graph illustrating a relationship between two characteristic values. FIG. 1B is a graph illustrating a relationship between two design variables. |
|---|---|
| FIG. 2 | is a schematic drawing illustrating an example of a data processing device used in a data analysis method and a data display method according to an embodiment of the present invention. |
| FIG. 3A | is a graph for explaining a first indicator. FIG. 3B is a graph for explaining a second indicator. FIG. 3C is a schematic drawing for explaining an example of a method for calculating the second indicator. FIG. 3D is a schematic drawing for explaining another example of the method for calculating the second indicator. |
| FIGS. 4A and 4B | are self-organizing maps of characteristic values. FIGS. 4C to 4H are self-organizing maps of design variables. |
| FIG. 5 | is a flowchart illustrating a method for drawing on the self-organizing map, in order of steps. |
| FIG. 6A | is a schematic drawing illustrating an example of the method for drawing on self-organizing maps. FIG. 6B is a schematic drawing illustrating another example of the method for drawing on self-organizing maps. |
| FIGS. 7A and 7B | are self-organizing maps of characteristic values drawn on the basis of the first indicator. FIG. 7C is a self-organizing map on which the first indicator is drawn. FIG. 7D is a self-organizing map on which the second indicator is drawn. |
| FIGS. 8A to 8F | are self-organizing maps of design variables drawn on the basis of the first indicator. |
| FIGS. 9A and 9B | are self-organizing maps on which the first indicator is drawn. FIGS. 9C to 9E are self-organizing maps of design variables drawn on the basis of the first indicator. FIGS. 9F and 9G are self-organizing maps of characteristic values on which the first indicator is drawn in an arrow shape. FIGS. 9H to 9J are self-organizing maps of design variables on which the first indicator is drawn in an arrow shape. |
| FIGS. 10A and 10B | are self-organizing maps of characteristic values on which the second indicator is drawn. FIGS. 10C to 10E are self-organizing maps of design variables on which the second indicator is drawn. FIGS. 10F and 10G are self-organizing maps of characteristic values on which the second indicator is drawn in an arrow shape. FIGS. 10H to 10J are self-organizing maps of design variables on which the second indicator is drawn in an arrow shape. |
| FIG. 11A | is a schematic drawing illustrating an example of a self-organizing map before clustering processing. FIG. 11B is a schematic drawing illustrating an example of a self-organizing map after clustering processing. FIG. 11C is a schematic drawing illustrating an example of a self-organizing map that is not subjected to clustering processing. |
| FIG. 12A | illustrates an example of the clustering processing of a self-organizing map. FIG. 12B illustrates another example of the clustering processing of a self-organizing map. |
| FIG. 13 | is a schematic drawing illustrating another example of a data processing device used in the data analysis method and the data display method according to an embodiment of the present invention. |
| FIG. 14 | is a flowchart illustrating an example of the data analysis method of the embodiment of the present invention, in order of steps. |
| FIG. 15 | is a schematic drawing illustrating another example of a data processing device used in the data analysis method and the data display method according to an embodiment of the present invention. |
| FIG. 16 | is a flowchart illustrating moving average processing of the data analysis method of the embodiment of the present invention, in order of steps. |
| FIG. 17 | is a graph showing an example of a weight function used in the moving average processing of a data visualization method of the embodiment of the present invention. |
| FIG. 18 | is a schematic diagram for explaining an example of a method for setting a master point. |
| FIG. 19 | is a schematic diagram for explaining another example of a method for setting the master point. |
| FIG. 20 | is a schematic drawing illustrating another example of a data processing device used in the data analysis method and the data display method according to an embodiment of the present invention. |

Description of Embodiments

Herein below, a data analysis method and a data display method according to the present invention are described in detail, on the basis of a preferred embodiment illustrated in the accompanying drawings.

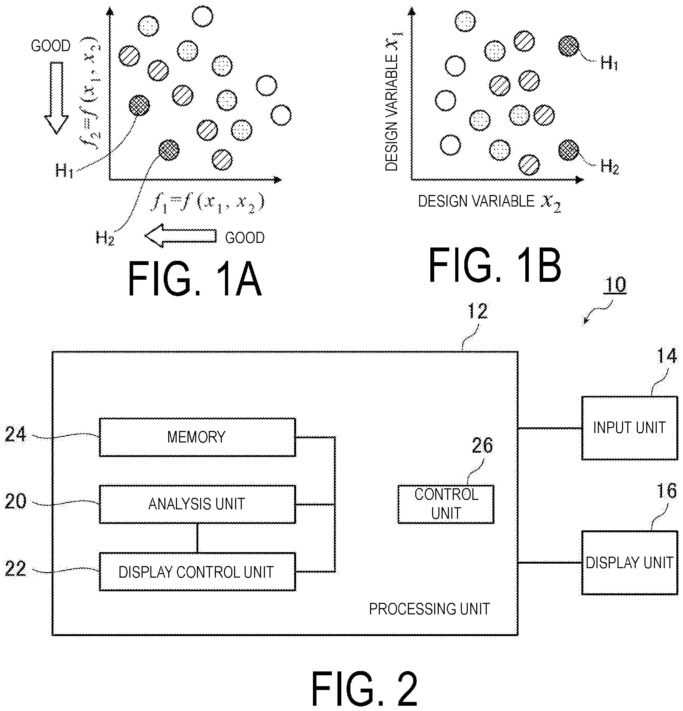

FIG. 1A is a graph illustrating a relationship between two characteristic values. FIG. 1B is a graph illustrating a relationship between two design variables.

As illustrated in FIG. 1A, two characteristic values $f_1$ and $f_2$ are functions of design variables $x_1$ and $x_2$. In a case where, for example, it is preferable that one of the characteristic values $f_1$ and $f_2$ be smaller, design values represented by reference signs $H_1$ and $H_2$ depicted in FIG. 1 are preferable for the two characteristic values $f_1$ and $f_2$. Note that the design variables $x_1$ and $x_2$ have the relationship illustrated in FIG. 1B.

As illustrated in FIG. 1B, the preferable design value $H_1$ is a value where the design variable $x_1$ and the design variable $x_2$ are large. The preferable design value $H_2$ is a value where the design variable $x_1$ is small and the design variable $x_2$ is large. Thus, the values of the design variables $x_1$ and $x_2$, of the design value $H_1$ and the design value $H_2$ for which the characteristic values $f_1$ and $f_2$ are good, differ. However, if the value of the design variable $x_2$ is large, the characteristic values $f_1$ and $f_2$ will become good characteristics. Thus, the design variable $x_2$ is an important design variable for obtaining good characteristics of the characteristic values $f_1$ and $f_2$. For example, the characteristic values $f_1$ and $f_2$ are the lateral spring constant of the tire and the rolling resistance of the tire, and the design variables $x_1$ and $x_2$ are parameters related to the shape of the tire.

As described above, an important problem in multi-purpose optimization relates to searching for design values that improve a plurality of characteristic values. At the same time, distinguishing which design variables in design variable space improve a plurality of characteristic values is also an important problem. However, there are a plethora of design variables and characteristic values in regular product design and it is difficult to distinguish which design variables contribute greatly to the characteristic values. Additionally, even if the results are presented graphically, inexperienced analysts may not be able to understand from FIGS. 1A and 1B that the value of the design variable $x_2$ is an important design variable for obtaining good characteristics of the characteristic values $f_1$ and $f_2$. The present invention seeks to eliminate the difficulties in understanding such causality.

FIG. 2 is a schematic drawing illustrating an example of a data processing device used in the data analysis method and the data display method according to the embodiment of the present invention.

A data processing device 10 illustrated in FIG. 2 is used in the data analysis method and the data display method in the present embodiment. However, provided that the data analysis method and the data display method can be executed using software and a computer or similar hardware, a device other than the data processing device 10 may be used.

A data set consisting of groups of two types of data, namely an input data Xi (i = 1, I) representing an input value and output data Yj (j = 1, m) representing an output value, is analyzed in output value space and the results thereof are displayed. Note that I represents the number of input data, and m represents the number of output data. Pluralities of the input values and the characteristic values exist. The input values and the output values have a predetermined relationship. This predetermined relationship is causality which indicates that, for example, the input values and the output values are represented by functions.

For example, in the data set, the input data representing the input values is a first data that represents a plurality of design variables of a structure and materials constituting the structure, and the output data representing the output values is a second data that represents a plurality of characteristic values of the structure and materials constituting the structure. In this case, the first data corresponds to the input data Xi (i = 1, I), and the second data corresponds to the output data Yj (j = 1, m), wherein I represents the number of design variables and m represents the number of characteristic values. Characteristic value space corresponds to the output value space.

For example, in the data set, a total of ten pieces of data, namely input data X1 to X6 and output data Y1 to Y4, are handled as one group, in a case where I = 6 and m = 2. A plurality of groups of these ten pieces of data (input data X1 to X6 and output data Y1 to Y4) exist. The number of groups in the data set is referred to as the data number. For example, if the data number is 100, 100 groups that each consist of ten pieces of data exist. Note that the numbers of pieces of the input data and the output data are not particularly limited to ten pieces and, provided that a plurality is provided, may be any numbers.

For example, in cases where the embodiment is used in the designing of a tire, the output data (characteristic values) are the characteristic values, lateral spring constant, and rolling resistance of the tire, and the input data (design variables) are the shape of the tire and the physical properties such as the elastic modulus of the members constituting the tire. For example, in cases where the embodiment is used in the designing of a wing, the output data (characteristic values) are the characteristic values, lift, and mass of the wing, and the input data (design variables) are the shape of the wing and the physical properties such as the elastic modulus of the members constituting the wing.

Note that in the data set, the input data (design variables) representing the input values and the output data (characteristic values) representing the output values are not particularly limited to specific data and may include data obtained from simulations, optimization or similar computer calculations, measurement data from various testing, and Pareto solutions.

The data processing device 10 includes a processing unit 12, an input unit 14, and a display unit 16. The processing unit 12 includes an analysis unit 20, a display control unit 22, a memory 24, and a control unit 26. The processing unit 12 also includes ROM and the like (not illustrated in the drawings).

The processing unit 12 is controlled by the control unit 26. Additionally, the analysis unit 20 is connected to the memory 24 in the processing unit 12, and the data of the analysis unit 20 is stored in the memory 24. Moreover, the data set described above, which is input from outside the device, is stored in the memory 24.

The input unit 14 is an input device such as a mouse, keyboard, or the like whereby various information is input via commands of an operator. The display unit 16 displays, for example, graphs using the data set, results obtained by the analysis unit 20, and the like, and known various displays are used as the display unit 16. Additionally, the display unit 16 includes printers and similar devices for displaying various types of information on output media.

The data processing device 10 functionally forms each part of the analysis unit 20 by executing programs (computer software) stored in the ROM or the like in the control unit 26. The data processing device 10 may be constituted by a computer in which each portion functions as a result of a program being executed as described above, or may be a dedicated device in which each portion is constituted by a dedicated circuit.

The analysis unit 20 calculates, for the data set described above, at least one of a first indicator and a second indicator in objective function space, the plurality of output values (characteristic values) being defined as an objective function.

Additionally, the analysis unit 20 generates self-organizing maps using the two types of data, namely the input data and the output data. The analysis unit 20 sets a threshold value for at least one of the first indicator and the second indicator, finds regions on the self-organizing map corresponding to the threshold value, and obtains position information on the self-organizing map of these regions. Furthermore, the analysis unit 20 generates image data in order to mark the regions corresponding to the threshold value.

The analysis unit 20 performs regression analysis using the regions on the self-organizing map corresponding to the threshold value. The analysis unit 20 also performs clustering processing using the regions on the self-organizing map corresponding to the threshold value. From the clustering processing, the analysis unit 20 determines whether the regions are dividable into clusters. In cases where it is determined that the regions can be divided into clusters, a line is generated using regression analysis for the clusters for which the number of regions is large.

The results obtained by the analysis unit 20 are stored in the memory 24, for example.

The display control unit 22 causes the results obtained by the analysis unit 20 (e.g. self-organizing maps and the like) to be displayed on the display unit 16. The display control unit 22 also causes the Pareto solution to be read from the memory 24 and displayed on the display unit 16. In this case, for example, the Pareto solution can be displayed in the form of a scatter diagram in which the characteristic values are shown on the axes. That is, the design variables are displayed in characteristic value space. In addition to a scatter diagram, the Pareto solution may be displayed in the form of a radar chart.

Additionally, for the obtained Pareto solution, the display control unit 22 may, for example, change at least one of the color, type, and size of symbols representing the values of the design variables depending on the values of the design variables. Information of the Pareto solution with the display mode that has been changed is stored in the memory 24. The display mode of the obtained Pareto solution is changed by the display control unit 22 and displayed by the display unit 16. Furthermore, the display control unit 22 includes a function for displaying a line connecting the Pareto solution for each value of the design variables. The display control unit 22 also includes a function for displaying a self-organizing map for each value of the characteristic values and each value of the design variables.

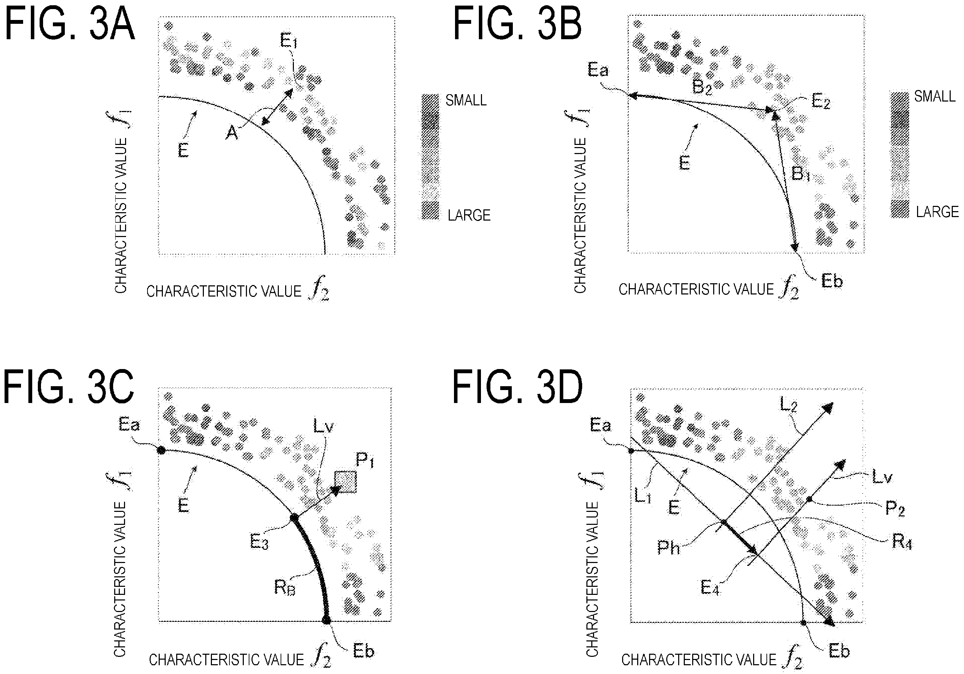

Next, a description is given of the first indicator and the second indicator calculated in the data analysis method. FIG. 3A is a graph for explaining the first indicator. FIG. 3B is a graph for explaining the second indicator.

FIG. 3A illustrates a Pareto solution for characteristic values $f_1$ and $f_2$. Reference sign E represents the Pareto front. The characteristic values have preferable directions depending on the required specifications and the like. Examples thereof include a direction in which the value increases, a direction in which the value decreases, a direction in which the value approaches a predetermined value, and the like. A first indicator A is represented by a distance from a preset value of the values of at least two characteristic values (objective functions) among the values of the plurality of characteristic values (objective functions). That is, the first indicator A is represented by the distance from a preset value, with respect to the characteristic values $f_1$ and $f_2$.

For example, the first indicator A is the distance to a Pareto solution $E_1$ from the Pareto front E. Note that the first indicator A is not limited to the distance from the Pareto front E. For example, a value may be preset for the values of at least two objective functions, in this case, the characteristic values $f_1$ and $f_2$, and the first indicator A may be the distance from this preset value.

As illustrated in FIG. 3B, a second indicator B is expressed as a ratio of the values of at least two objective functions among the values of the plurality of objective functions and, in this case, is expressed as a ratio of the values of the characteristic values $f_1$ and $f_2$. The second indicator B is expressed as a ratio of a distance $B_2$ between a Pareto solution $E_2$ and an extreme Pareto solution Ea to a distance $B_1$ between a Pareto solution $E_2$ and an extreme Pareto solution Eb. Additionally, a distance along the Pareto front E may be calculated and used as the second indicator B. Hereinafter, a description is given, using FIGS. 3C and 3D, of the second indicator B obtained by calculating the distance along the Pareto front E. In FIGS. 3C and 3D, components that are identical to those in FIGS. 3A and 3B have been assigned the same reference signs, and detailed descriptions of those components have been omitted.

An example of a case is described in which the second indicator B of a point $P_1$ illustrated in FIG. 3C is found. First, a normal line Lv to the Pareto front E, that passes through the point $P_1$ is found. Next, a point of intersection $E_3$

between the normal line Lc and the Pareto front E is found.

Here, two extreme Pareto solutions Ea and Eb exist but, in cases where a plurality of extreme Pareto solutions exist, one extreme Pareto solution is set as a reference extreme Pareto solution. In the example illustrated in FIG. 3C, the extreme Pareto solution Eb is used as the reference extreme Pareto solution. A distance $R_B$ between the reference extreme Pareto solution Eb and the point of intersection $E_3$ is found. This distance $R_B$ is used as the second indicator B.

In addition, for example, as illustrated in FIG. 3D, in cases where the Pareto front E can be linearly approximated, the second indicator B can be calculated using a distance from an approximate straight line $L_1$.

In this case, first, the Pareto front E is linearly approximated to find the approximate straight line $L_1$. Then, a normal line $L_2$ orthogonal to the approximate straight line $L_1$ is found. Reference signs are changed with the normal line $L_2$ as a center axis. Specifically, a point of intersection Ph between the approximate straight line $L_1$ and the normal line $L_2$ is found. Using the point of intersection Ph as a reference point, that is, as zero, the extreme Pareto solution Ea side of the point of intersection Ph is set as minus and the extreme Pareto solution Eb side of the point of intersection Ph is set as plus.

For example, in a case where the second indicator B is found for a point $P_2$, a normal line Lv that passes through the point $P_2$ and that is orthogonal to the approximate straight line $L_1$ is found. Then, a point of intersection $E_4$ between the normal line Lv and the approximate straight line $L_1$ is found. Next, a distance $R_4$ between the point of intersection Ph and the point of intersection $E_4$ is found. The point of intersection $E_4$ is on the extreme Pareto solution Eb side of the point of intersection Ph and, thus, is marked with a plus reference sign. The distance $R_4$ is the second indicator B.

Note that the position of the normal line $L_2$ is not particularly limited to a specific position provided that it is on the approximate straight line $L_1$. Additionally, the point for which the second indicator B is found may be on the normal line $L_2$.

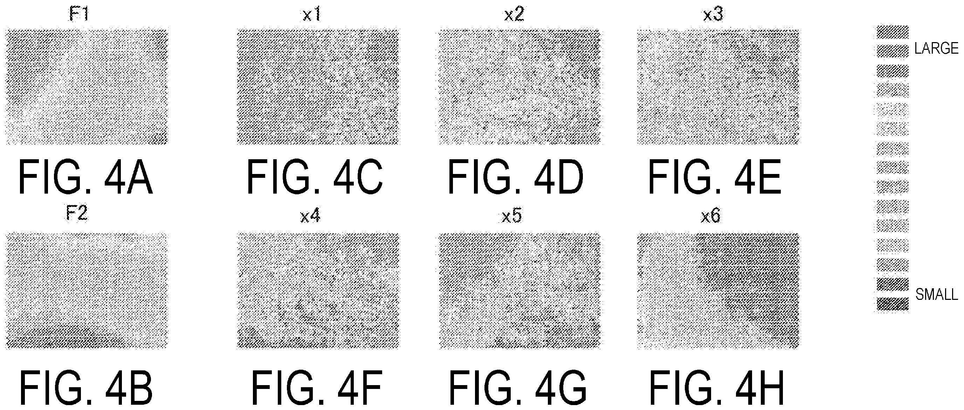

The self-organizing maps illustrated in FIGS. 4A to 4H, for example, can be generated by the analysis unit 20. As a result, causality between the characteristic values and the design variables can be depicted. Note that the self-organizing maps may be generated using, for example, the method described in Japanese Patent No. 4339808. As such, detailed description of the generation of the self-organizing maps is omitted.

For example, the self-organizing maps illustrated in FIGS. 4A to 4H are self-organizing maps that are generated for characteristic values F1 and F2 among the data set consisting of characteristic values F1 to F4 and design variables x1 to x6. FIG. 4A is a self-organizing map of the characteristic value F1, and FIG. 4B is a self-organizing map of the characteristic value F2. FIG. 4C is a self-organizing map of the design variable x1; FIG. 4D is a self-organizing map of the design variable x2; FIG. 4E is a self-organizing map of the design variable x3; FIG. 4F is a self-organizing map of the design variable x4; FIG. 4G is a self-organizing map of the design variable x5; and FIG. 4H is a self-organizing map of the design variable x6. Note that the characteristic values F1 and F2 are, for example, lateral spring constant and rolling resistance, and the design variables x1 to x6 are, for example, parameters related to the shape of the tire.

Inexperienced analysts cannot easily understand which design variables of the design variables x1 to x6 are important factors by simply looking at the self-organizing maps of the characteristic values F1 and F2 illustrated in FIGS. 4A and 4B and the self-organizing maps of the design variables x1 to x6 illustrated in FIGS. 4C to 4H.

In the present embodiment, marks are placed on the self-organizing maps using the first indicator A or the second indicator B and, as such, it is easier for inexperienced analysts to understand which design variables among the design variables are important factors. Additionally, using the first indicator A and the second indicator B, the important factors among the design variables may be stored in the memory 24 and the information of the important factors may be output out of the device. As a result, information of the important design variables can be obtained. Next, a description is given of the data analysis method and the display method of the present embodiment.

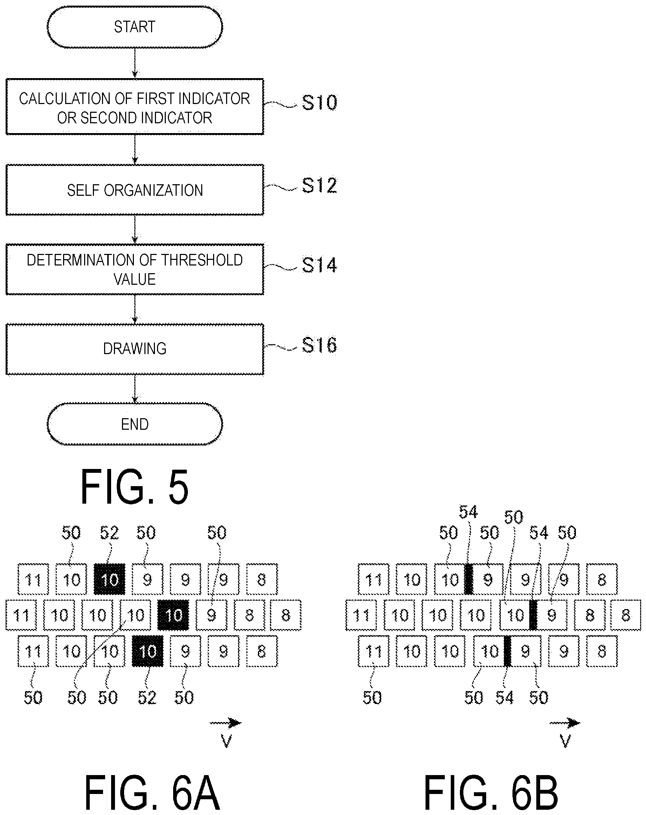

FIG. 5 is a flowchart showing a method for drawing on the self-organizing map, in order of steps.

For example, the data set described above is prepared and the data set prepared in advance is directly input into the analysis unit 20 via the input unit 14, or is stored in the memory 24 via the input unit 14.

Next, in the analysis unit 20, the first indicator A or the second indicator B is calculated from the data set (step S10). Then, in the analysis unit 20, self-organizing maps are generated using the data set (step S12). Thus, self-organizing maps such as those illustrated in FIGS. 4A to 4H, for example, are obtained.

Next, in the analysis unit 20, the threshold value is set using at least one of the first indicator A and the second indicator B (step S14). When the first indicator A is used, the threshold value is preferably from 1/5 to 1/7 of a maximum value of the first indicator A. When the second indicator B is used, the threshold value is preferably the median value.

Next, in the analysis unit 20, the regions on the self-organizing map corresponding to the threshold value are found. Then, the position information of the regions on the self-organizing map corresponding to the threshold value is stored in the memory 24, for example. In the analysis unit 20, image data is generated in order to place marks at the positions of the regions corresponding to the threshold value, on the basis of the position information of the regions.

Next, the display control unit 22 causes the self-organizing maps to be displayed on the display unit 16 together with the regions corresponding to the threshold value (step S16). Note that the marks placed on the self-organizing maps are not particularly limited to specific marks and examples thereof include marks that change the color of cells, marks that change the size of the cells, and marks that change the shape of the cells of the self-organizing maps.

Next, a description is given of the method for finding the regions on the self-organizing map corresponding to the threshold value.

FIG. 6A is a schematic drawing illustrating an example of the method for drawing on self-organizing maps. FIG. 6B is a schematic drawing illustrating another example of the method for drawing on self-organizing maps.

FIG. 6A illustrates a portion of a self-organizing map in which a plurality of cells 50 constituting the self-organizing map are lined up side by side. The numerical values in the cells 50 indicate the values of the cells 50.

The threshold value is set to 9.5 and the numerical values of the cells 50 are checked in the analysis unit 20 by scanning the cells 50 in the lateral direction V. In cases where the numerical value of one of the cells 50 changes from 10 to 9, a cell 52 preceding this cell 50 where the numerical value changes is determined to be a region corresponding to the threshold value. Then, the position information of the cell 52 is stored in the memory 24, for example. Thus, in the example illustrated in FIG. 6A, three cells 52 are obtained as the regions corresponding to the threshold value.

Alternatively, for example, as illustrated in FIG. 6B, in a self-organizing map in which a plurality of cells 50 are lined up side by side, the threshold value is set to 9.5 and the numerical values of the cells 50 are checked in the analysis unit 20 by scanning the cells 50 in the lateral direction V. In cases where the numerical value of the cells 50 changes from 10 to 9, a space between the cell 50 having a numerical value of 10 and the cell 50 having a numerical value of 9 is determined as a region 54 corresponding to the threshold value. Then, the position information of the region 54 is stored in the memory 24, for example. Thus, in the example illustrated in FIG. 6B, three regions 54 are obtained as the regions corresponding to the threshold value.

In FIGS. 6A and 6B, the cells 50 are scanned in the lateral direction V, but the scanning direction is not limited thereto and may be any direction. For example, the scanning direction may be a direction orthogonal to the lateral direction V.

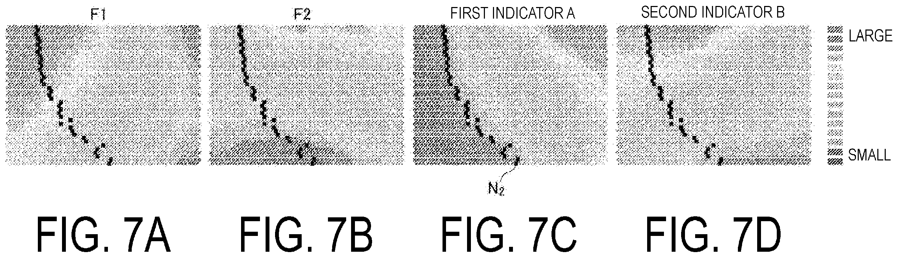

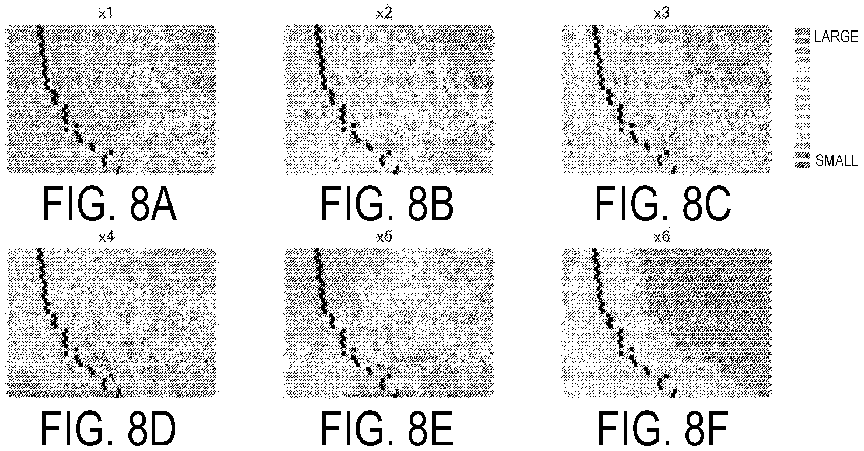

Examples of the results obtained through the data analysis method and the display method of the present embodiment are illustrated in FIGS. 7A to 7D and FIGS. 8A to 8F.

FIG. 7A is a self-organizing map of the characteristic value F1 on which the first indicator is drawn; and FIG. 7B is a self-organizing map of the characteristic value F2 on which the first indicator is drawn. FIG. 7C is a self-organizing map of the first indicator on which the first indicator is drawn; and FIG. 7D is a self-organizing map of the second indicator on which the first indicator is drawn.

FIG. 8A is a self-organizing map of the design variable x1 on which the first indicator is drawn; FIG. 8B is a self-organizing map of the design variable x2 on which the first indicator is drawn; FIG. 8C is a self-organizing map of the design variable x3 on which the first indicator is drawn; FIG. 8D is a self-organizing map of the design variable x4 on which the first indicator is drawn; FIG. 8E is a self-organizing map of the design variable x5 on which the first indicator is drawn; and FIG. 8F is a self-organizing map of the design variable x6 on which the first indicator is drawn.

In the self-organizing map of the design variable x5 of FIG. 8E, it is clear that the values of the self-organizing map change along the first indicator. Thus, it is understood that the ratio of the characteristic value F1 to the characteristic value F2 can be changed by changing the value of the design variable x5. Additionally, in the self-organizing map of the design variable x6 of FIG. 8F, it is clear that the characteristic value F1 and the characteristic value F2 can be changed simultaneously by changing the value of the design variable x6. From this, it can be understood that the design variable x6 is an important parameter for achieving both characteristic values F1 and F2 in a compatible manner.

On the other hand, values with respect to the first indicator are substantially unchanged with the design variable x1 of FIG. 8A. The design variable x1 has little effect on the characteristic values F1 and F2 as the characteristic values F1 and F2 do not change when the design variable x1 is changed. Thus, it is understood that the design variable x1 is not an important parameter for the characteristic values F1 and F2.

Thus, by displaying the first indicator on the self-organizing maps of the design variables x1 to x6, causality between the characteristic values and the design variables can easily be understood and even inexperienced analysts can easily understand which factors are important among the design variables.

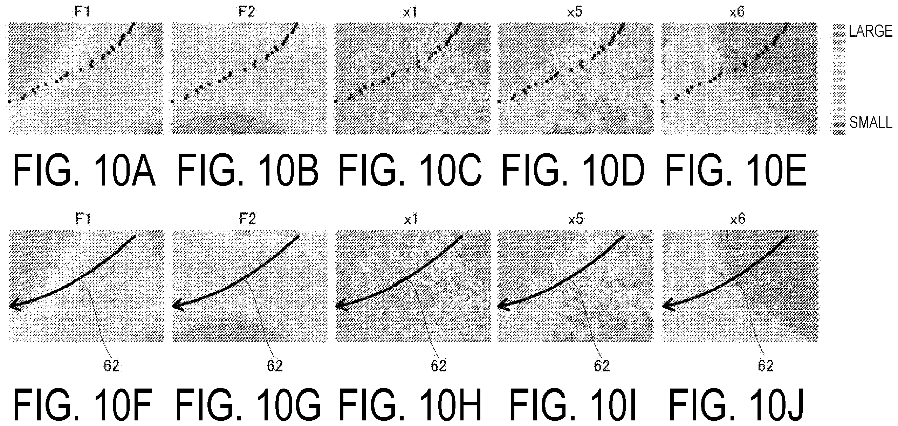

Note that while not illustrated in the drawings, the second indicator B can also be displayed on the self-organizing maps in the same manner as the first indicator A (see FIGS. 10A to 10J).

Additionally, in the present embodiment, the analysis results obtained by the analysis unit 20 are displayed on the self-organizing maps, but the use of the analysis results obtained by the analysis unit 20 is not limited thereto, and the position information of the regions corresponding to the threshold value may be output from the device. As a result, analysts can view the self-organizing maps, on which the first indicator or the second indicator is displayed, using a device other than the data processing device 10, for example.

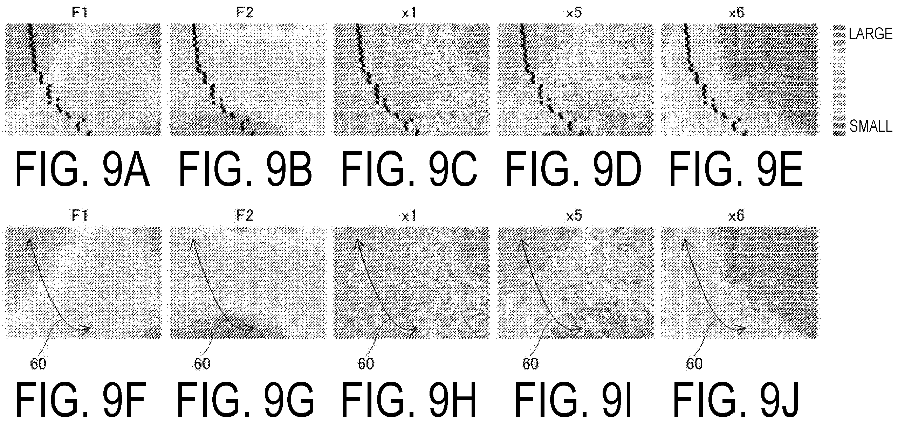

The first indicator is displayed on the self-organizing maps of the characteristic values F1 and F2 and the design variables x1, x5, and x6 (see FIGS. 9A to 9E), but the display method thereof is not particularly limited to a specific display method. For example, as illustrated in FIGS. 9F to 9J, the first indicator may be represented by a line 60 with arrows at the ends thereof. In this case, for example, the line 60 is obtained in the analysis unit 20 by connecting the regions corresponding to the threshold value. Note that the method by which the line 60 is obtained is not particularly limited to a specific method, and a configuration is possible in which a regression line is calculated from the regions corresponding to the threshold value using regression analysis, and arrows are affixed at both ends of the regression line. The arrows of the line 60 indicate the directions in which both of the characteristic values F1 and F2 are achieved in a compatible manner.

By displaying the regions corresponding to the threshold value as the line 60 instead of as points, it is even easier to understand the causality between the characteristic values and the design variables.

For the second indicator as well, the regions corresponding to the threshold value can be displayed using a line in the same manner as for the first indicator.

FIGS. 10A and 10B are self-organizing maps of characteristic values on which the second indicator is drawn; FIGS. 10C to 10E are self-organizing maps of design variables on which the second indicator is drawn; FIGS. 10F and 10G are self-organizing maps of characteristic values on which the second indicator is drawn in an arrow shape; and FIGS. 10H to 10J are self-organizing maps of design variables on which the second indicator is drawn in an arrow shape.

The second indicator is displayed on the self-organizing maps of the characteristic values F1 and F2 and the design variables x1, x5, and x6 (FIGS. 10A to 10E). However, for example, as illustrated in FIGS. 10F to 10J, the second indicator may be displayed as a line 62 representing the second indicator, having an arrow affixed to an end thereof. In this case, for example, the line 62 may be obtained in the analysis unit 20 by connecting the regions corresponding to the threshold value to make a line, and affixing an arrow to an end of the line. Note that the method for obtaining the line 62 is not particularly limited to a specific method and the line 62 may be obtained using regression analysis in the same manner as the line 60 described above.

The arrow of the line 62 is affixed to the end of the line 62 for which the first indicator A is decreasing. The distance to the Pareto solution shortens as the first indicator A decreases and, as such, the arrow of the line 62 indicates the direction in which both of the characteristic values F1 and F2 are achieved in a compatible manner.

For the second indicator as well, by displaying the regions corresponding to the threshold value as the line 62 instead of as points, it is even easier to understand the causality between the characteristic values and the design variables.

Next, a description is given of the method for affixing the arrow to the line 62. First, the direction in which the values are smaller is found in the self-organizing map of the first indicator A corresponding to the second indicator B. Specifically, in the self-organizing map of the first indicator A illustrated in FIG. 7C, an edge point $N_1$ and an edge point $N_2$ are found, and the value of the cell of the edge point $N_1$ and the value of the cell of the edge point $N_2$ are compared. Of the edge point $N_1$ and the edge point $N_2$, the edge point with the smaller value of the cell is determined. Then, the arrow is affixed to the line 62 of the self-organizing map of the design variable, on the side of the line 62 corresponding to the edge point with the smaller value of the edge points of the first indicator A. Thus, the arrow can be affixed to the line 62. Note that, by calculating these matters in the analysis unit 20, the finding of the edge points of the first indicator A corresponding to the second indicator B, and the affixing of the arrow to the side of the line 62 corresponding to the edge point where the value of the cell, of the cells at the edge points, is smaller can be automated.

With the second indicator B, as illustrated in FIG. 10E, it is clear that the value of the design variable x6 changes along the marks. Thus, it is clear that the values of the characteristic values F1 and F2 can be changed by changing the value of the design variable x6. From this, it can be understood that the design variable x6 is an important parameter. Furthermore, by displaying the line 62 having the arrow as described above, as illustrated in FIG. 10J, it is even easier to understand that the design variable x6 is an important parameter.

Additionally, as illustrated in FIGS. 10C and 10H, the value of the design variable x1 is substantially unchanged along the marks. From this, it can be understood that the design variable x1 is a parameter that does not contribute to the changing of the characteristic values F1 and F2.

Additionally, as illustrated in FIGS. 10D and 10I, the value of the design variable x5 is also substantially unchanged along the marks. From this, it can be understood that the design variable x5 affects the characteristic values F1 and F2 differently with the first indicator A and the second indicator B.

In cases where the regions corresponding to the threshold value of the first indicator or the second indicator are displayed as the line 60 or 62, clustering processing is preferably performed in the analysis unit 20 to obtain the line 60 or 62 with high precision.

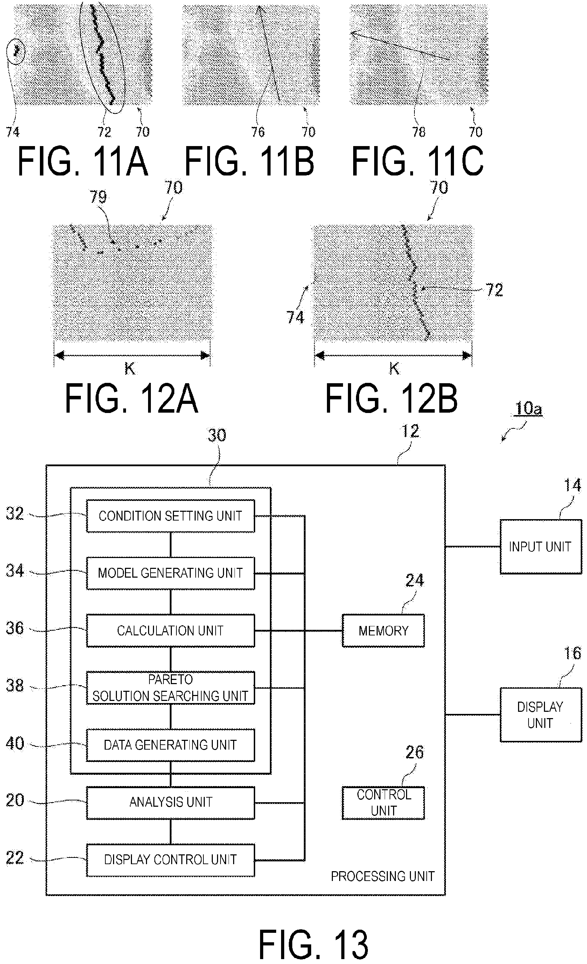

FIG. 11A is a schematic drawing illustrating an example of a self-organizing map before clustering processing; FIG. 11B is a schematic drawing illustrating an example of a self-organizing map after clustering processing; and FIG. 11C is a schematic drawing illustrating an example of a self-organizing map not subjected to clustering processing.

In the self-organizing map 70 of FIG. 11A, a case is illustrated in which there are two regions corresponding to the threshold value of the first indicator, namely a first region 72 and a second region 74. In this case, the analysis unit 20 performs the clustering processing and performs regression analysis and, thus, obtains the line 76 illustrated in FIG. 11B. On the other hand, in cases where the clustering processing is not performed, the line 78 illustrated in FIG. 11C is obtained.

Various clustering techniques can be used in the clustering processing. Examples thereof include single linkage methods, complete linkage methods, k-means methods, and the like.

FIG. 12A illustrates an example of the clustering processing of a self-organizing map. FIG. 12B illustrates another example of the clustering processing of a self-organizing map.

The first region 72 and the second region 74 exist in the self-organizing map 70 illustrated in FIG. 11A and, as such, results such as those illustrated in FIG. 11B are obtained depending on the clustering processing. For example, in the clustering processing by the analysis unit 20, K/5, where K is the width of the self-organizing map 70, is set as the threshold value. In cases where the distance is K/5 or greater, the region is considered to be a different cluster. In this case, in the self-organizing map 70 illustrated in FIG. 11A, as illustrated in FIG. 12A, the first region 72 and the second region 74 are distinguished as different clusters. Thus, regression analysis is performed for the first region 72 that has more regions and the line is generated. As a result, the line 76 illustrated in FIG. 11B, for example, can be obtained.

However, in a case where a large threshold value is used to distinguish the clusters in the clustering processing, the first region 72 and the second region 74 will be determined to belong to the same cluster and, thus, the clustering processing results illustrated in FIG. 12B will be obtained. As a result, the regression analysis will yield the line 78 illustrated in FIG. 11C, for example. Thus, by appropriately configuring the threshold value for distinguishing the clusters when performing clustering processing, proper cluster classification can be achieved in the analysis unit 20, and lines suitable for facilitating the understanding of analysts and the like can be drawn on the self-organizing map.

In the present embodiment, a data set that was prepared in advance is used, but the present embodiment is not limited thereto. For example, a configuration is possible in which a Pareto solution is calculated and, self-organizing maps and the like are generated using this Pareto solution.

FIG. 13 is a schematic drawing illustrating another example of a data processing device used in the data analysis method and the data display method according to an embodiment of the present invention.

With the exception of including a data processing unit 30 and differing on the point of generating the data set described above, a data processing device 10a illustrated in FIG. 13 has the same configuration as the data processing device 10 illustrated in FIG. 1. As such, detailed description of the data processing device 10a is omitted.

The data processing unit 30 is connected to the analysis unit 20 in the data processing device 10a illustrated in FIG. 13. Additionally, the memory 24 and the control unit 26 are connected to the data processing unit 30, and the data processing unit 30 is controlled by the control unit 26.

The data processing unit 30 includes a condition setting unit 32, a model generating unit 34, a calculating unit 36, a Pareto solution searching unit 38, and a data generating unit 40.

The data processing unit 30 generates a data set having a plurality of groups of two types of data, namely input data representing input values and output data representing output values.

Note that, a configuration is possible in which the data set is directly input into the analysis unit 20 via the input unit 14, without being generated by the data processing unit 30, as described above. Additionally, a configuration is possible in which the data set is stored in the memory 24 via the input unit 14. In both of these cases, processing is carried out without the data processing unit 30 generating the data set. As such, it is not absolutely required that the data processing unit 30 generate the data set.

Next, a description is given of each unit of the data processing unit 30. Various types of conditions and information necessary for displaying the Pareto solution as a scatter diagram or as a self-organizing map in characteristic value space (objective function space) are input and set in the condition setting unit 32. The various types of conditions and information are input via the input unit 14. The various types of conditions and information set in the condition setting unit 32 are stored in the memory 24.

The data of the data set is set in the condition setting unit 32. For example, a plurality of parameters defined as design variables among parameters defining the structure and the materials constituting the structure is set in the condition setting unit 32. Note that, variable factors such as load, and boundary conditions may be set as the design variables.

Additionally, a plurality of parameters defined as characteristic values (objective functions) among parameters defining the structure and the materials constituting the structure, for example, is set as the data of the data set. Other than chemical and physical characteristic values, indicators for evaluating the structure and the materials constituting the structure such as cost may be used as the characteristic values.

The "structure and the materials constituting the structure" do not refer to the structure alone, but rather to the entirety of the system that includes the structure or part of the system. Examples thereof include the parts constituting the structure, the assembly form of the structure, and the like.

The characteristic values set in the condition setting unit 32 are physical quantities that are to be evaluated. The objective functions are functions for finding the physical quantities that are to be evaluated.

In a case where the structure is a tire, the characteristic values are the characteristic values of a tire. In this case, the characteristic values are physical quantities that are to be evaluated as tire performance factors, and examples thereof include cornering power (CP), which is the lateral force at a slip angle of 1 degree, and which is an indicator of steering stability; cornering characteristics, which are an indicator of steering stability; the primary natural frequency of the tire, which is an indicator of ride comfort; rolling resistance, which is an indicator of rolling resistance; the lateral spring constant, which is an indicator of steering stability; wear energy of the tire tread member, which is an indicator of wear resistance; and the like. The objective functions are functions for finding these characteristic values. The objective functions have preferable directions as performance factors. Examples thereof include a direction in which the value increases, a direction in which the value decreases, a direction in which the value approaches a predetermined value, and the like.

The design variables define the shape of the structure, the internal structure and the material characteristics of the structure, and the like. In the case of a tire, the design variables are a plurality of parameters among the material behavior of the tire, the shape of the tire, the cross-sectional shape of the tire, and the structure of the tire. Examples of the design variables include the curvature radius, which defines the crown shape in the tread portion of the tire; the belt width dimension of the tire, which defines the tire internal structure; and the like. Other examples include the filler dispersion shape, the filler volume fraction, and the like, which define the material characteristics of the tread portion. Constraint conditions are conditions for constraining the values of the objective functions to a predetermined range and constraining the values of the design variables to a predetermined range.

Additionally, in a case where the structure is a tire, information of vehicle specifications and the like is set for use in a vehicle traveling simulation. Examples of this information include traveling conditions such as the applied load of the tire and the rolling speed of the tire; conditions of the road surface on which the tire travels such as the uneven form and the coefficient of friction; and the like.

Information for defining a nonlinear response relationship between the parameters of the design variables and the characteristic values is set in the condition setting unit 32. Numerical simulations such as FEM, theoretical equations, and approximation equations are included in the nonlinear response relationship.

Models generated by a nonlinear response relationship, boundary conditions of those models, and simulation conditions and constraint conditions for the simulation when numerical simulations such as FEM are performed are set in the condition setting unit 32. Furthermore, optimization conditions are set for obtaining a Pareto solution. Examples of such conditions include conditions for Pareto solution searching and the like.

The conditions for Pareto solution searching consist of the method for searching for the Pareto solution and various conditions in the Pareto solution searching. For example, a genetic algorithm can be used as the method for searching for the Pareto solution. It is generally known that the search capability of genetic algorithms decreases as the number of objective functions increases. One method to solve this problem is increasing the number of individuals. On the other hand, if the number of individuals is increased and a Pareto solution search is performed, many Pareto solutions will be found. Accordingly, providing a method whereby the causality between a large amount of characteristic value data and design parameters is displayed in an easily recognizable manner is a problem, but the present invention solves this problem.

In addition, a domain of the design variables is set in the condition setting unit 32. Moreover, a discrete value used when contracting the Pareto solution (described later) is set in the condition setting unit 32.

The model generating unit 34 generates various types of calculation models on the basis of the defined nonlinear response relationship. The nonlinear response relationship includes numerical simulations such as FEM as described above and, in this case, a mesh model based on the design parameters that represent the design variables and the characteristic value parameters that represent the characteristic values is generated in the model generating unit 34. Additionally, in cases where a theoretical equation or an approximation equation are used, a theoretical equation or an approximation equation based on the design parameters and the characteristic value parameters is generated. Note that when the structure is a tire, a tire model is generated. A simulation operation is performed in the calculating unit 36 using the tire model.

Here, while the tire model generated in the model generating unit 34 is generated using the various types of design parameters set in the condition setting unit 32, a conventionally known generation method may be used to generate the tire model. Note that at least a road surface model, which constitutes the object on which the tire model rolls, is generated together with the tire model. Additionally, a model in which the rim, wheel, and tire rotation axis on which the tire is mounted is reproduced may be used as the tire model. Moreover, as necessary, a model reproducing a vehicle on which the tire is mounted may be incorporated into the tire model. Here, an integrated model including a tire model, a rim model, a wheel model, and a tire rotation axis model can be generated on the basis of preset boundary conditions.

Each of these models is preferably a discrete model that can be numerically calculated. Examples thereof include finite element models and the like used in conventional finite element methods (FEM). Note that in the tire model, when a tire design plan is found whereby, for example, tire wet performance and other tire performance factors are optimized, a model reproducing interposed objects present on the road surface may be generated in addition to the road surface model and the tire model. Examples of such an interposed object model include various models in which water, snow, mud, sand, gravel, ice, or the like on the road surface is reproduced, and this model is preferably generated as a discrete model that can be numerically calculated. Additionally, the road surface model is not limited to models that reproduce flat road surfaces and, as necessary, models that reproduce road surface shapes that include surface irregularities may be generated.

The calculating unit 36 calculates the characteristic values using the various models generated in the model generating unit 34. Thus, characteristic values for the desing variables are obtained. A Pareto solution exists in the characteristic values. The obtained characteristic values are stored in the memory 24.

For example, the calculating unit 36 finds the behavior of the tire model, the forces acting on the tire model, or other physical quantities in chronological order when simulation conditions for reproducing the rolling motion of a tire rolling on a road surface are applied to the tire model, the road surface model, or the like generated in the model generating unit 34. The calculating unit 36 functions by, for example, executing a subroutine of a conventional finite element solver. Additionally, the calculating unit 36 solves theoretical equations, approximation equations, or the like and calculates the characteristic values when theoretical equations, approximation equations, or the like are generated in the model generating unit 34.

The Pareto solution searching unit 38 searches for a Pareto solution from among the characteristic values obtained by the calculating unit 36 and calculates a Pareto solution depending on the Pareto solution search conditions set in the condition setting unit 32. The obtained Pareto solution is stored in the memory 24.

Here, the term "Pareto solution" means that, while a solution cannot be said to be superior to any other solution, no better solutions exist in a plurality of objective functions with trade-off relationships. Typically, a plurality of Pareto solutions exists as a set.

The Pareto solution searching unit 38 searches for the Pareto solution using a genetic algorithm, for example. A conventional method in which the solution set is divided into a plurality of regions along the objective functions, and a multi-purpose GA is applied to each divided solution set can be used as the genetic algorithm. Examples thereof include Divided Range Multi-Objective GA (DRMOGA), Neighborhood Cultivation GA (NCGA), Distributed Cooperation model of MOGA and SOGA (DCMOGA), Non-dominated Sorting GA (NSGA), Non-dominated Sorting GA-II (NSGA2), Strength Pareto Evolutionary Algorithm-II (SPEAII), and the like. At this time, the solution set is required to be widely distributed in the solution space and a set of highly accurate Pareto solutions is required to be found. As such, selection is performed in the Pareto solution searching unit 38 using, for example, a vector evaluated genetic algorithm (VEGA), a Pareto ranking method, or a tournament method. Other than genetic algorithms, simulated annealing (SA) or particle swarm optimization (PSO) may be used.

The nonlinear response relationship defined between the design variables (input values) and the characteristic values (output values), that is, the relationship used when the characteristic values are found using the design variables, is not limited to FEM and similar simulations, and theoretical equations and approximation equations such as those described above may be used. For example, instead of calculating using a simulation model, the values of the objective functions may be calculated using a simulation approximation equation. In this case, the Pareto solution can be obtained from experimental results obtained on the basis of a design of experiments using an approximation equation between the design variables and the objective functions, an example thereof being a simulation approximation equation. Conventional nonlinear functions obtained via a polynomial equation, or neural network can be used as this simulation approximation equation.

The data generating unit 40 reads, from the memory 24, this objective function data and the Pareto solution obtained in the Pareto solution searching unit 38 and stored in the memory 24, and generates a data set consisting of groups of two types of data, namely data representing the design variables and data representing the characteristic values. The data set generated in the data generating unit 40 is stored in the memory 24.

Next, a description is given of an example of a method for calculating the Pareto solution.

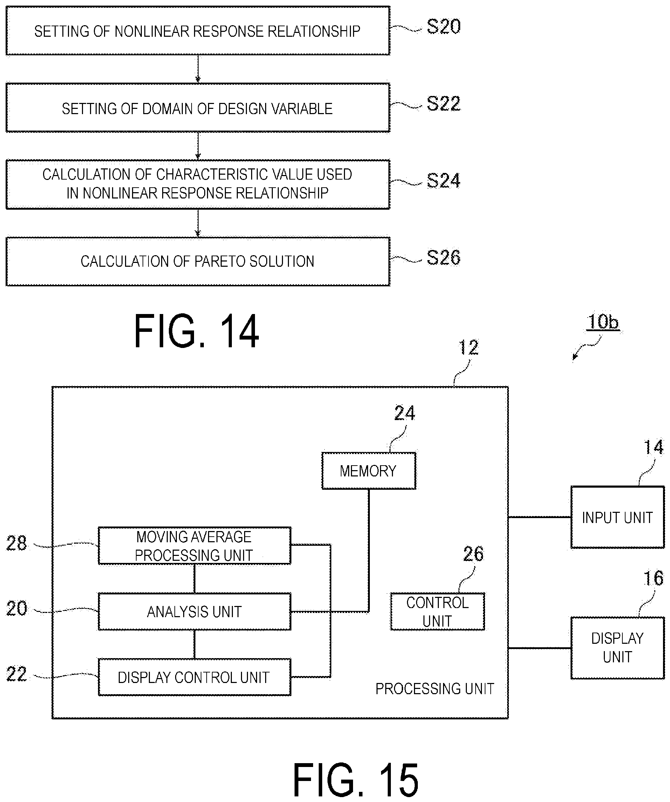

FIG. 14 is a flowchart illustrating an example of the data analysis method of the embodiment of the present invention, in order of steps.

First, the design variables and the characteristic values for the target structure are set. In the present embodiment, the structure is a tire, for example. The shape parameter of the tire is set as the design variable for the tire. Also, two characteristic values, namely rolling resistance and lateral spring constant are set. In the present embodiment, the shape parameter of the tire is the input and the rolling resistance and the lateral spring constant are the output. The manner in which the rolling resistance and the lateral spring constant change in response to the shape parameter of the tire is displayed. The shape parameter of the tire, the rolling resistance, and the lateral spring constant are set in the condition setting unit 32.

After the conditions are set, first, as illustrated in FIG. 14, the nonlinear response used when the characteristic values are found from the design variable is set (step S20). That is, the relationship between the design variable and the characteristic values is set. The type of nonlinear response is stored in the memory 24, for example. Specifically, the relationship between the shape parameter of the tire and the rolling resistance and lateral spring constant is set. In a case where the shape parameter of the tire is the input and the rolling resistance or the lateral spring constant is the output, the set relationship is expressed using a nonlinear function such as a quadratic polynomial in which the shape parameter of the tire is a variable of the rolling resistance. Additionally, the set relationship is expressed using a nonlinear function such as a quadratic polynomial in which the shape parameter of the tire is a variable of the lateral spring constant.

Next, the domain of the design variable is set (step S22). In this case, an upper limit value and a lower limit value are set for the parameter of the design variable. The value between the lower limit value and the upper limit value is continuous. For example, in the case of the shape parameters of the tire, an upper limit and a lower limit of size is set as the domain of the design variables, and the value between the lower limit value and the upper limit value is continuous. In a case of the rubber composition of a tire, an upper limit and a lower limit of the elastic modulus is set as the domain of the design variable. The setting of the domain of the design variable is performed in the condition setting unit 32 and the set domain of the design is stored in the memory 24, for example. In the present embodiment, an upper limit value and a lower limit value are set for the shape parameter of the tire.

Next, model generation is performed in the model generating unit 34 on the basis of the nonlinear response relationship, and the characteristic values are calculated in the calculating unit 36 on the basis of the nonlinear response relationship set in step S20 (step S24). At this time, the set domain of the design variable is read from the memory 24 and the characteristic values are calculated. The results of calculating the characteristic values are stored in the memory 24, for example. In the case of a FEM or similar simulation, a mesh model is generated in the model generating unit 34, and response to the input is simulated in the calculating unit 36 using FEM or the like. Specifically, the rolling resistance and lateral spring constant for the shape parameter of the tire is calculated.

Next, the results of calculating the characteristic values are subjected to optimization in the Pareto solution searching unit 38, in which the characteristic values are used as objective functions, and the Pareto solution is obtained (step S26). A genetic algorithm, for example, is used to calculate this Pareto solution. The obtained Pareto solution is stored in the memory 24.

Thus, the Pareto solution is calculated in the data processing device 10a and, then, the data set is generated in the data generating unit 40. Various types of data processing are performed in the analysis unit 20 using the generated data set. Thereafter, as necessary, self-organizing maps can be displayed on the display unit 16 by the display control unit 22 as described above. Other than the point of generating the Pareto solution, the data processing device 10a can display the regions based on the first indicator and the second indicator on self-organizing maps in the same manner as the data processing device 10 described above. As such, detailed description thereof is omitted. In this case as well, it is easier for inexperienced analysts to visually understand the causality between the input values and the output values, and to understand which design variables (input values) are important. Moreover, information that facilitates understanding can be obtained.

In the data analysis method and the display method of the present embodiment, a data set that is prepared in advance is used as-is, but the present embodiment is not limited thereto. For example, the data set may be subjected to moving average processing of the input values in output value space.

FIG. 15 is a schematic drawing illustrating another example of a data processing device used in the data analysis method and the data display method according to an embodiment of the present invention.

With the exception of including a moving average processing unit 28 and differing on the point of performing moving average processing on the data set described above, a data processing device 10b illustrated in FIG. 15 has the same configuration as the data processing device 10 illustrated in FIG. 1. As such, detailed description of the data processing device 10b is omitted. The moving average processing unit 28 is connected to the analysis unit 20 in the data processing device 10b illustrated in FIG. 15. Additionally, the memory 24 and the control unit 26 are connected to the moving average processing unit 28, and the moving average processing unit 28 is controlled by the control unit 26.

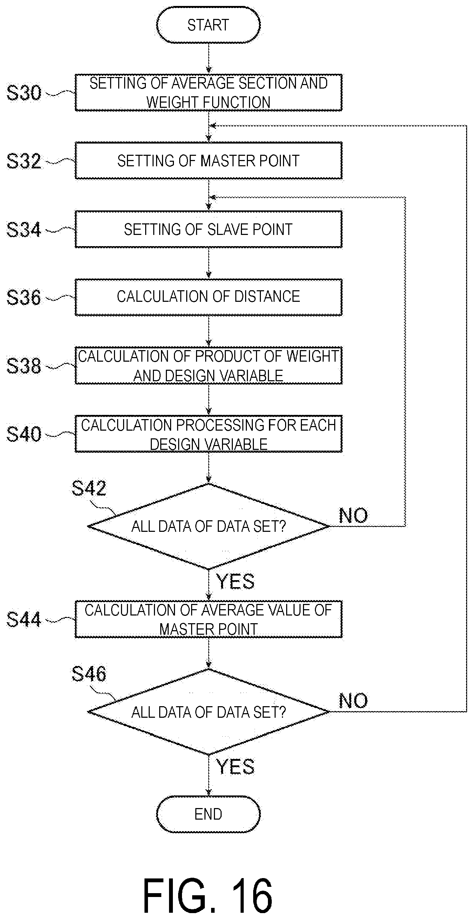

Next, a description of the moving average processing method in the moving average processing unit 28 is given while referencing FIGS. 16 to 19. FIG. 16 is a flowchart illustrating the moving average processing of the data analysis method of the embodiment of the present invention, in order of steps.

First, the shape, size, and weight function of an average section in output value space are set (step S30). The average section is a setting region for finding an average value of master points (described later) when the moving average processing is performed. The average region is appropriately set in accordance with the types of data of the input data (e.g. the number of input parameters) and the types of data of the output data (e.g. the number of output parameters) of the data set, and the shape and the like thereof are not particularly limited to a specific shape. For example, in a case where the output value space is represented by two types of data among the output data, that is, in a case where the output value space is two-dimensional, the average space is, for example, a polygon such as a rectangle, a circle, or other two-dimensional shape.

Additionally, in a case where the output value space is represented by three types of data among the output data, that is, in a case where the output value space is three-dimensional, the average space is, for example, a polygonal prism such as a rectangular prism, a sphere, or other three-dimensional shape. Furthermore, in a case where the output value space is represented by four types of data among the output data, that is, in a case where the output value space is four-dimensional, the average space is, for example, a hypercube, a hypersphere, or the like.

Additionally, the size of the average section is not particularly limited to a specific size. Furthermore, the output value space may be normalized when the average section is set. That is, the characteristic value space (described later) may be normalized.

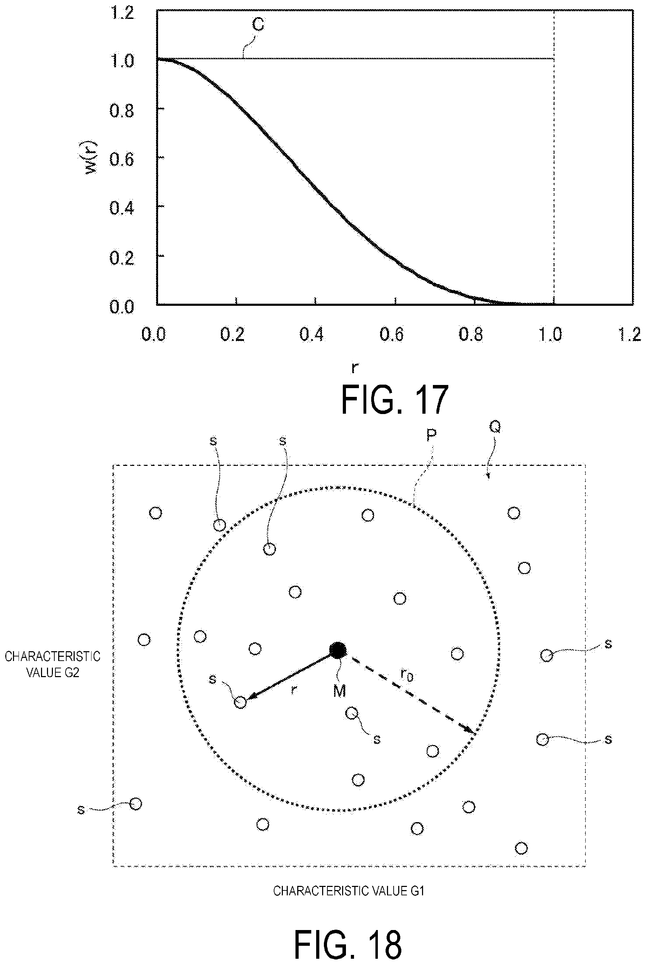

Function $w(r)$ of Equation (1) below can be used as the weight function of the average section. When graphically depicted, the function $w(r)$ of Equation (1) is as shown in FIG. 17.

In the function w(r) of Equation (1), $r_0$ represents the size of the average section and r represents a distance between a master point and a slave point. When the average section is a circle, ro is the radius of the circle, and when the average section is a hypersphere ro is the radius of the hypersphere. Note that, in the function w(r) of Equation (1), as illustrated in FIG. 17, the size of the average section is such that the distance r between the master point and the slave point is 1.0.

[Equation 1]

$$w(r) = 1 - 6\left(\frac{r}{r_0}\right)^2 + 8\left(\frac{r}{r_0}\right)^3 - 3\left(\frac{r}{r_0}\right)^4 \quad \cdots (1)$$

The weight function is not limited to the function of Equation (1) above and, for example may be a constant value in the average section such as that represented by reference sign C in FIG. 17. The value of the constant value is not particularly limited to a specific value, but is 1.0 in the example illustrated in FIG. 17.

Furthermore, at least one of the average section and the weight function may be changed depending on the density of the data in output value space.

Next, for example, the master point is set from the input data constituted by the design variable (step S32). Then, a slave point is set from the input data constituted by the design variable (step S34).

Specifically, as illustrated in FIG. 18, in characteristic value space Q formed by the characteristic value G1 and the characteristic value G2 in which the average section P is set, the master point M is set from among the existing input data within the average section P. As a result, the points in the characteristic value space Q other than the master point M become slave points s. Data of the master point M is master data and data of the slave points s is slave data.

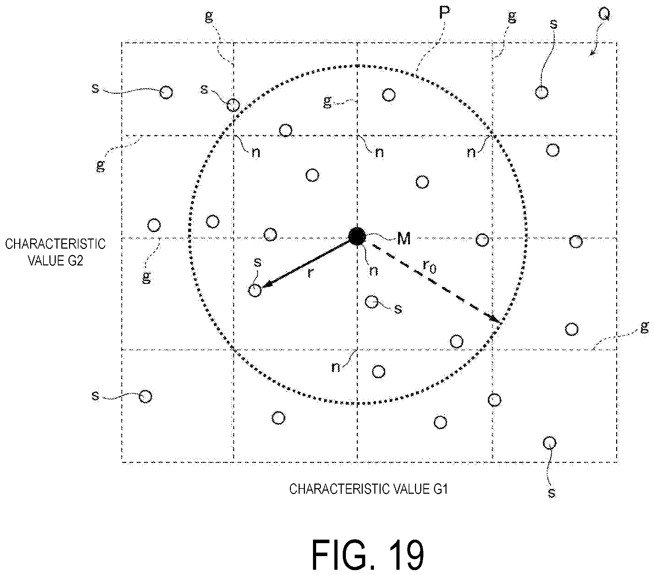

As illustrated in FIG. 19, in an example of a method for setting the master point M, a grid g may be set in the characteristic value space Q, and a point of intersection n on the grid g may be set as the master point M. In this case, the master point M need not correspond to existing input data. Note that, the size of the grid g is not particularly limited to a specific size, and can be appropriately set in accordance with the data number or the like.

Next, a distance r between the master point and the slave point in the characteristic value space Q is calculated (step S36). A conventional method for calculating the distance between two coordinates can be used to calculate the distance r.

In step S36, in cases where the calculated distance is in the average section P, that is when r ≤ ro, a weight value ($W_v$) is calculated using the weight function and this weight value ($w_v$) is stored in the memory 24, for example. Additionally, a product value ($W_{vx}$) of the input data value and the weight value is calculated by multiplying the weight value ($w_v$) by each input data value of the input values (e.g. the design variable value (x)). Then, the obtained product value ($w_v x$) of the input data value and the weight value is stored in the memory 24, for example (step S38). In this case, the product value ($w_v x$) of the input data value and the weight value is calculated for each input data. That is, the product value ($w_v x$) of the design variable value (x) and the weight value is calculated for each design variable.

Next, a sum ($W_{vtot}$) of the weight values ($w_v$) and a sum ($W_v X_{tot}$) of the product values ($w_v x$) of the input data values and the weight value stored in step S38 are calculated for each input data (step S40). As a result, the sum ($W_{vtot}$) of the weight values ($w_v$) and the sum ($W_v X_{tot}$) of the product values ($w_v x$) of the input data values and the weight values at one master point M is obtained for each design variable.

Next, it is determined whether or not all of the groups of the data set, with the exception of the data of the data set used as the master point, have been subjected to calculation processing as slave points (step S42). In this case, the calculation processing of step S42 can be determined by, for example, comparing the data number of data set with the number of calculated slave data. In step S42, in cases where the data of the data set, with the exception of the data used as the master point, is subjected to calculation processing as slave points, a value is obtained for each input data by dividing the sum ($W_v X_{tot}$) of the product values ($w_v x$) of the input data values and the weight values by the sum ($W_{vtot}$) of the weight values ($W_v$), that is, a value is obtained from $W_v X_{tot}/W_{vtot}$. This value is set as the average value of the input data of the master point M for each input data, for example, the average value of the design variable of the master point M for each design variable, and is stored in the memory 24, for example (step S44).

In step S44, the average values of the design variables, centered on the master point M, can be obtained for each design variable in the average section P illustrated in FIGS. 18 and 19.

On the other hand, in cases where the data of the data set, with the exception of the data used as the master point, is not subjected to the calculation processing as slave points, in order to obtain the average values of the design variables, centered around the master point M, for each design variable in step S24, step S34 (setting of the slave point) to step S40 (calculation of the product of the weight and the design variable) is repeated until the data of the data set with the exception of the data used as the master point is calculated as the slave point. Then, as described above, the average values of the input data of the master point M for each design variable, for example, the average values of the design variables of the master point M, is stored in the memory 24, for example.

Next, it is determined whether or not all of the groups of the data set have been subjected to calculation processing as master points M (step S46). The moving average processing is ended in cases where all of the groups of the data set have been subjected to calculation processing as the master point M in step S46. In this case, the calculation processing of step S42 can be determined by, for example, comparing the data number of data set with the number of calculated master points M.

Note that in cases where the master point M is set as a point of intersection n of the grid g, the calculation processing of step S42 can be determined by, for example, comparing the number of intersections n with the number of calculated master points M.

On the other hand, in cases where all of the groups of the data set have not been subjected to calculation processing as the master point M, in order to set all of the groups of the data set as the master point M, step S32 (setting of the master point) to step S44 (calculation of the average value of the master points) are repeated. The moving average processing is ended in cases where all of the groups of the data set have been subjected to calculation processing as the master point M in step S46.

Thus, the moving average processing of the input data in output value space, for example, the moving average processing of the design variable in characteristic value space, is completed.

In the present embodiment, variation and noise in the input data can be eliminated by performing the moving average processing of the input data in output value space. Thereafter, various types of data processing are performed in the analysis unit 20. Thereafter, as necessary, self-organizing maps can be displayed on the display unit 16 by the display control unit 22 as described above. Other than the point of performing the moving average processing on the data set, the data processing device 10b can display the regions based on the first indicator and the second indicator on self-organizing maps in the same manner as the data processing device 10 described above. As such, detailed description thereof is omitted. As described above, by performing the moving average processing, it is easier to find causality between the output values and the input data when the regions corresponding to the threshold value are displayed on self-organizing maps. In this case as well, it is easier for inexperienced analysts to visually understand the causality between the input values and the output values, and to understand which design variables (input values) are important. Moreover, information that facilitates understanding can be obtained.

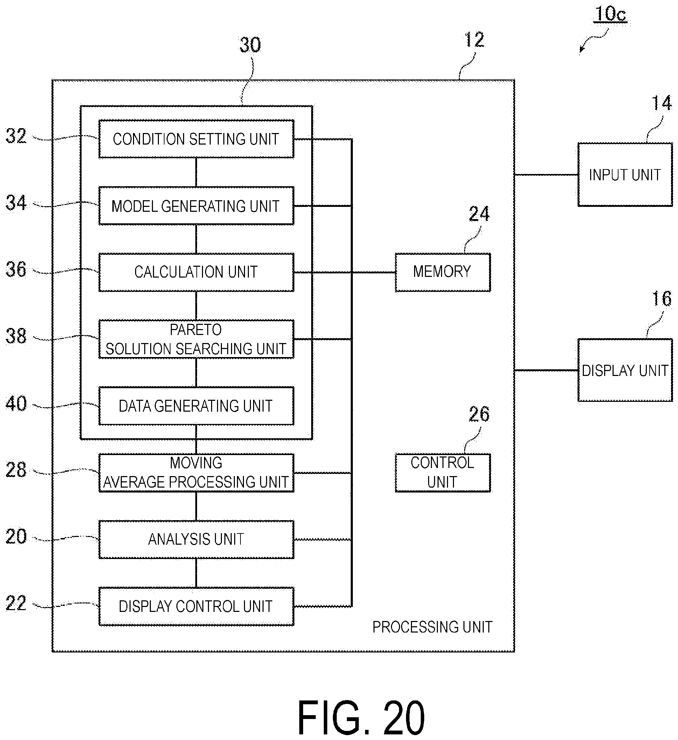

In the data processing device 10b described above, a data set prepared in advance is subjected to the moving average processing in the moving average processing unit 28, but the subject of the processing is not limited thereto. For example, as illustrated in FIG. 20, a configuration is possible in which a data processing unit 30 is provided, a Pareto solution is calculated in the data processing unit 30, and a data set including the calculated Pareto solution is subjected to the moving average processing in the moving average processing unit 28.

Note that, the data processing unit 30 has the same configuration as the data processing device 10a of FIG. 13 and, as such, detailed description thereof is omitted.

Other than the points of generating the Pareto solution and performing the moving average processing, the data processing device 10c can display the regions based on the first indicator or the second indicator on self-organizing maps in the same manner as the data processing device 10. As such, detailed description thereof is omitted. In this case as well, it is easier for inexperienced analysts to visually understand the causality between the input values and the output values, and to understand which design variables (input values) are important. Moreover, information that facilitates understanding can be obtained.

A fundamental description of the present invention has been given. The data analysis method and the data display method of the present invention are described in detail above. However, it should be understood that the present invention is not limited to the above embodiment, but may be improved or modified in various ways without departing from scope of the present invention.

Reference Signs List

    10, 10a, 10b, 10c Data processing device
    12 Processing unit
    14 Input unit
    16 Output unit
    20 Analysis unit
    22 Display control unit
    24 Memory
    26 Control unit

28 Moving average processing unit
30 Data processing unit
32 Condition setting unit
34 Model generating unit
36 Calculation unit
38 Pareto solution searching unit
40 Data generating unit
50, 52 Cell
54 Region
60, 62, 76, 78 Line
70 Self-organizing map
72 First region
74 Second region

**Claims**

1. A data analysis method targeting, in a plurality of input values and a plurality of output values having a predetermined relationship, two types of data, namely input data representing the plurality of input values and output data representing the plurality of output values, the method comprising a step of:

   finding at least one of a first indicator and a second indicator in objective function space, the plurality of output values being defined as an objective function; wherein

   the first indicator is a distance from a preset value of values of at least two objective functions among values of a plurality of objective functions; and the second indicator is expressed as a ratio of values of at least two objective functions among values of a plurality of objective functions.

2. The data analysis method according to claim 1, further comprising the steps of:

   generating a self-organizing map using the two types of data, namely the input data and the output data;
   setting a threshold value using at least one of the first indicator and the second indicator; and
   finding regions on the self-organizing map corresponding to the threshold value.

3. The data analysis method according to claim 2, further comprising a step of:

   performing regression analysis using the regions on the self-organizing map corresponding to the threshold value.

4. The data analysis method according to claim 2, further comprising the steps of:

   carrying out clustering processing using the regions on the self-organizing map corresponding to the threshold value;
   determining from the clustering processing if the regions are dividable into clusters; and
   when the regions are dividable into the clusters, generating a line using regression analysis on clusters for which a number of the regions is large.

5. The data analysis method according to any one of claims 1 to 4, wherein:

   the input data representing the input values represents design variables of a structure and materials constituting the structure; and
   the output data representing the output values represents characteristic values of the structure and the materials constituting the structure.

6. The data analysis method according to any one of claims 1 to 5, wherein:

   the output data includes a Pareto solution.

**7.** A data display method targeting, in a plurality of input values and a plurality of output values having a predetermined relationship, two types of data, namely input data representing the plurality of input values and output data representing the plurality of output values, the method comprising the steps of:

finding at least one of a first indicator and a second indicator in objective function space, the plurality of output values being defined as an objective function;

displaying at least one of the first indicator and the second indicator together with the two types of data, namely the input data and the output data;

generating a self-organizing map using the two types of data, namely the input data and the output data;

setting a threshold value using at least one of the first indicator and the second indicator;

finding regions on the self-organizing map corresponding to the threshold value; and

marking and displaying the regions on the self-organizing map corresponding to the threshold value; wherein

the first indicator is a distance from a preset value of values of at least two objective functions among values of a plurality of objective functions; and the second indicator is expressed as a ratio of values of at least two objective functions among values of a plurality of objective functions.

**8.** The data display method according to claim 7, further comprising the steps of:

performing regression analysis using the regions on the self-organizing map corresponding to the threshold value; and

displaying results of the regression analysis on the self-organizing map.

**9.** The data display method according to claim 7, further comprising the steps of:

carrying out clustering processing using the regions on the self-organizing map corresponding to the threshold value;

determining from the clustering processing if the regions are dividable into clusters; and

when the regions are dividable into the clusters, generating a line using regression analysis on clusters for which a number of the regions is large, and displaying the line represented by an approximation equation of the clusters on the self-organizing map.

**10.** The data display method according to any one of claims 7 to 9, wherein:

the input data representing the input values represents design variables of a structure and materials constituting the structure; and

the output data representing the output values represents characteristic values of the structure and the materials constituting the structure.

**11.** The data display method according to any one of claims 7 to 10, wherein: the output data includes a Pareto solution.

GOOD

$f_2 = f(x_1, x_2)$

$H_1$

$H_2$

$f_1 = f(x_1, x_2)$

GOOD

## FIG. 1A

DESIGN VARIABLE $x_1$

$H_1$

$H_2$

DESIGN VARIABLE $x_2$

## FIG. 1B

10

12

14

INPUT UNIT

24 — MEMORY

26

20 — ANALYSIS UNIT

CONTROL UNIT

22 — DISPLAY CONTROL UNIT

16

DISPLAY UNIT

PROCESSING UNIT

## FIG. 2

FIG. 3A

FIG. 3B

FIG. 3C

FIG. 3D

Figures showing characteristic value plots.

FIG. 4A FIG. 4C FIG. 4D FIG. 4E

FIG. 4B FIG. 4F FIG. 4G FIG. 4H

EP 3 208 752 A1

FIG. 5

FIG. 6A

FIG. 6B

FIG. 7A  FIG. 7B  FIG. 7C  FIG. 7D

x1

FIG. 8A

x2

FIG. 8B

x3

FIG. 8C

LARGE

SMALL

x4

FIG. 8D

x5

FIG. 8E

x6

FIG. 8F

F1  F2  x1  x5  x6

LARGE

SMALL

FIG. 9A  FIG. 9B  FIG. 9C  FIG. 9D  FIG. 9E

F1  F2  x1  x5  x6

60  60  60  60  60

FIG. 9F  FIG. 9G  FIG. 9H  FIG. 9I  FIG. 9J

FIG. 10A　FIG. 10B　FIG. 10C　FIG. 10D　FIG. 10E

FIG. 10F　FIG. 10G　FIG. 10H　FIG. 10I　FIG. 10J

EP 3 208 752 A1

FIG. 11A   FIG. 11B   FIG. 11C

FIG. 12A   FIG. 12B

**PROCESSING UNIT**

CONDITION SETTING UNIT

MODEL GENERATING UNIT

CALCULATION UNIT

PARETO SOLUTION SEARCHING UNIT

DATA GENERATING UNIT

ANALYSIS UNIT

DISPLAY CONTROL UNIT

MEMORY

CONTROL UNIT

INPUT UNIT

DISPLAY UNIT

FIG. 13

SETTING OF NONLINEAR RESPONSE RELATIONSHIP — S20

SETTING OF DOMAIN OF DESIGN VARIABLE — S22

CALCULATION OF CHARACTERISTIC VALUE USED
IN NONLINEAR RESPONSE RELATIONSHIP — S24

CALCULATION OF PARETO SOLUTION — S26

# FIG. 14

10b

12

24

MEMORY

14

INPUT UNIT

28 — MOVING AVERAGE
PROCESSING UNIT

26

20 — ANALYSIS UNIT

CONTROL
UNIT

16

22 — DISPLAY CONTROL UNIT

DISPLAY
UNIT

PROCESSING UNIT

# FIG. 15

START

S30 — SETTING OF AVERAGE SECTION AND WEIGHT FUNCTION

S32 — SETTING OF MASTER POINT

S34 — SETTING OF SLAVE POINT

S36 — CALCULATION OF DISTANCE

S38 — CALCULATION OF PRODUCT OF WEIGHT AND DESIGN VARIABLE

S40 — CALCULATION PROCESSING FOR EACH DESIGN VARIABLE

S42 — ALL DATA OF DATA SET? — NO

YES

S44 — CALCULATION OF AVERAGE VALUE OF MASTER POINT

S46 — ALL DATA OF DATA SET? — NO

YES

END

FIG. 16

FIG. 17

FIG. 18

CHARACTERISTIC
VALUE G2

CHARACTERISTIC VALUE G1

# FIG. 19

FIG. 20

## INTERNATIONAL SEARCH REPORT

| International application No. |
| --- |
| PCT/JP2015/082262 |

| A. CLASSIFICATION OF SUBJECT MATTER |
| --- |
| *G06N99/00*(2010.01)i, *G06F17/50*(2006.01)i, *G06N3/08*(2006.01)i |

According to International Patent Classification (IPC) or to both national classification and IPC

| B. FIELDS SEARCHED |
| --- |
| Minimum documentation searched (classification system followed by classification symbols)<br>G06N99/00, G06F17/50, G06N3/08 |

Documentation searched other than minimum documentation to the extent that such documents are included in the fields searched
Jitsuyo Shinan Koho 1922–1996 Jitsuyo Shinan Toroku Koho 1996–2016
Kokai Jitsuyo Shinan Koho 1971–2016 Toroku Jitsuyo Shinan Koho 1994–2016

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2006-285381 A (The Yokohama Rubber Co., Ltd.),<br>19 October 2006 (19.10.2006),<br>entire text; all drawings<br>(Family: none) | 1-11 |
| A | JP 2014-182605 A (The Yokohama Rubber Co., Ltd.),<br>29 September 2014 (29.09.2014),<br>entire text; all drawings<br>(Family: none) | 1-11 |

☒ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>02 February 2016 (02.02.16) | Date of mailing of the international search report<br>09 February 2016 (09.02.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2015/082262

C (Continuation). DOCUMENTS CONSIDERED TO BE RELEVANT

| Category* | Citation of document, with indication, where appropriate, of the relevant passages | Relevant to claim No. |
|---|---|---|
| A | Hiroyuki HIRANO, Tomohiro YOSHIKAWA, "A study on Multi-group Moving Method to Improve Convergence in Many-Objective Optimization Problems", 2013 Nendo The 27th Proceedings of the Annual Conference of JSAI [CD-ROM], 04 June 2013 (04.06.2013), 2L1-4, pages 1 to 4, particularly, 3.1 Hyoka Shihyo | 1-11 |

Form PCT/ISA/210 (continuation of second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4339808 B

**Non-patent literature cited in the description**

- *Nippon Gomu Kyokaishi,* 2012, vol. 85, 289-295